# EUROPÄISCHE PATENTANMELDUNG

(11) **EP 0 718 139 A2**
(43) Veröffentlichungstag der Anmeldung: **26.06.1996**
(21) Anmeldenummer: 95119400.0
(22) Anmeldetag: 08.12.1995
(51) Int. Cl.: B60K 7/00

(54) **Einzelradantrieb für ein elektrisch angetriebenes Fahrzeug**

(30) Priorität: 20.12.1994 DE 4445407
(71) Anmelder: SIEMENS AKTIENGESELLSCHAFT, D-80333 München (DE)
(72) Erfinder: Pfannschmidt, Bernd, Dipl.-Ing. (FH), D-90574 Rosstal (DE)

(57) **Zusammenfassung**

Einzelradantrieb, bei dem ein Motor (4,18) mit seinem Stator (6,21) an einem ersten Fahrwerksteil befestigt ist und bei dem sich das erste Fahrwerksteil (1) über eine Primärfederung (3) an einem ungefederten zweiten Fahrwerksteil (2) abstützt, auf dem das Einzelrad (8) drehbar gelagert ist, wobei der Rotor (7,19) des Motors (4,18) sein Drehmoment über eine Kopplungseinrichtung (11) überträgt, deren radiale Beweglichkeit größer ist als der Federweg der Primärfederung (3). Bei einem derartigen Einzelradantrieb, der insbes. für elektrisch angetriebene Schienenfahrzeuge geeignet ist, ist der Anteil an ungefederten Massen gering.

## Beschreibung

Die Erfindung betrifft einen Einzelradantrieb für ein elektrisch angetriebenes Fahrzeug, bei dem sich ein erstes Fahrwerksteil über eine Primärfederung an einem ungefederten oder zum Teil ungefederten zweiten Fahrwerksteil abstützt. Ein derartiger Einzelradantrieb für ein Fahrwerk für Niederflurbahnen ist aus der WO 93/09989 bekannt.

Aufgabe der vorliegenden Erfindung ist es, einen Einzelradantrieb mit einem möglichst geringen Anteil an ungefederten Massen zu schaffen.

Die Aufgabe wird erfindungsgemäß durch die Merkmale im Anspruch 1 gelöst. Vorteilhafte Ausgestaltungen der Erfindung sind jeweils Gegenstand von weiteren Ansprüchen.

Bei dem erfindungsgemäßen Einzelradantrieb ist ein Motor mit seinem Stator an einem ersten Fahrzeugteil befestigt, das sich über eine Primärfederung an einem ungefederten oder zum Teil ungefederten zweiten Fahrwerksteil abstützt, auf dem das Einzelrad unmittelbar drehbar gelagert ist. Der Rotor des Motors überträgt sein Drehmoment zum Einzelrad über eine Kopplungseinrichtung, deren radiale Beweglichkeit größer ist als der Federweg der Primärfederung.

Bei dem Einzelradantrieb gemäß Anspruch 1 ist damit nur noch das zweite Fahrwerksteil, bei dem es sich üblicherweise um die Radträgerschwinge oder den Teil einer Achse bzw. um die Achse selbst handelt und auf dem das Einzelrad drehbar gelagert ist, ungefedert bzw. zum Teil ungefedert. Ein derartiger Einzelradantrieb weist somit einen maximalen Anteil an gefederten Massen auf.

Durch den geringen Anteil der ungefederten Massen ergibt sich insbesondere bei Schienenfahrzeugen ein verbesserter Fahrkomfort bei gleichzeitig wesentlich verringertem Verschleiß der Radreifen.

Der erfindungsgemäße Einzelradantrieb kann als Direktantrieb (Anspruch 2) oder als getriebebehafteter Antrieb (Anspruch 3) ausgebildet sein. Weiterhin ist es möglich, daß der Motor des Einzelradantriebs als Radnabenmotor (Anspruch 4) ausgebildet oder axial neben dem Einzelrad angeordnet ist.

Der erfindungsgemäße Einzelradantrieb eignet sich in vorteilhafter Weise sowohl für die Aufnahme eines Innenläufer-Motors (Anspruch 5) als auch zur Aufnahme eines Außenläufer-Motors (Anspruch 6).

Bei einer Ausgestaltung gemäß Anspruch 7 ist in vorteilhafter Weise der axiale Ausbau des Antriebsaggregats in beide Richtungen möglich. Es ist dadurch möglich, den Antrieb nach außen hin auszubauen, ohne vorher Fahrwerksteile (Einzelrad, Drehgestell) demontieren zu müssen. Damit kann auch ein Anheben des Wagenkastens entfallen, wodurch ein schneller Tausch des Antriebsaggregats sichergestellt ist.

Zur weiteren Erläuterung der Erfindung sowie ihrer vorteilhaften Ausgestaltungen wird auf die Zeichnung Bezug genommen, in der anhand von zwei schematisch dargestellten Ausführungsbeispielen weitere Vorteile und Einzelheiten der Erfindung beschrieben sind. Es zeigen:
- FIG 1: ein erstes Ausführungsbeispiel eines Einzelradantriebs im Halbschnitt entlang der Linie I-I in FIG 2,
- FIG 2: den Einzelradantrieb nach FIG 1 in Seitenansicht,
- FIG 3: ein zweites Ausführungsbeispiel eines Einzelradantriebs im Schnitt.

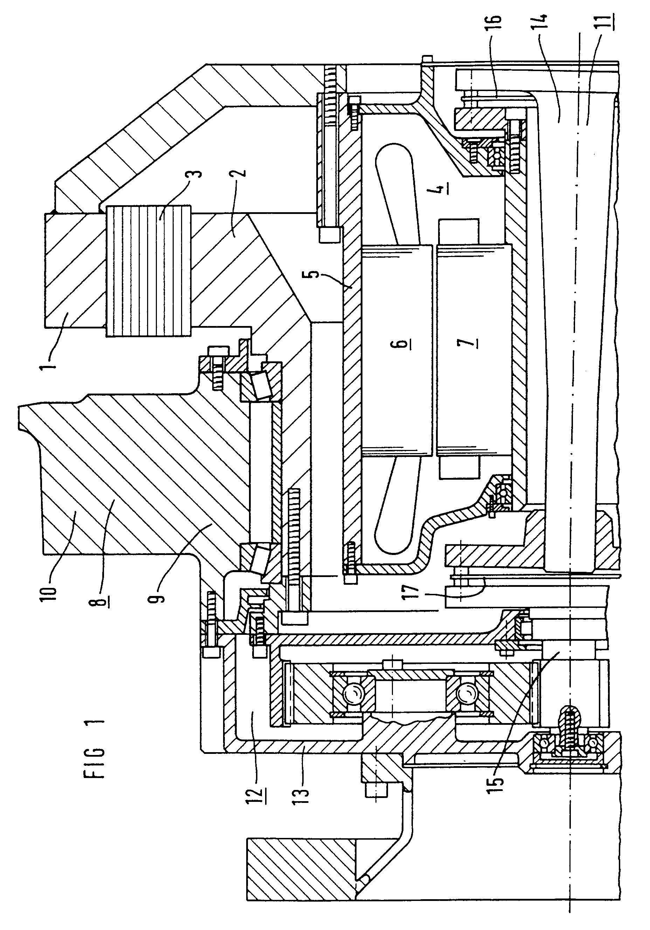

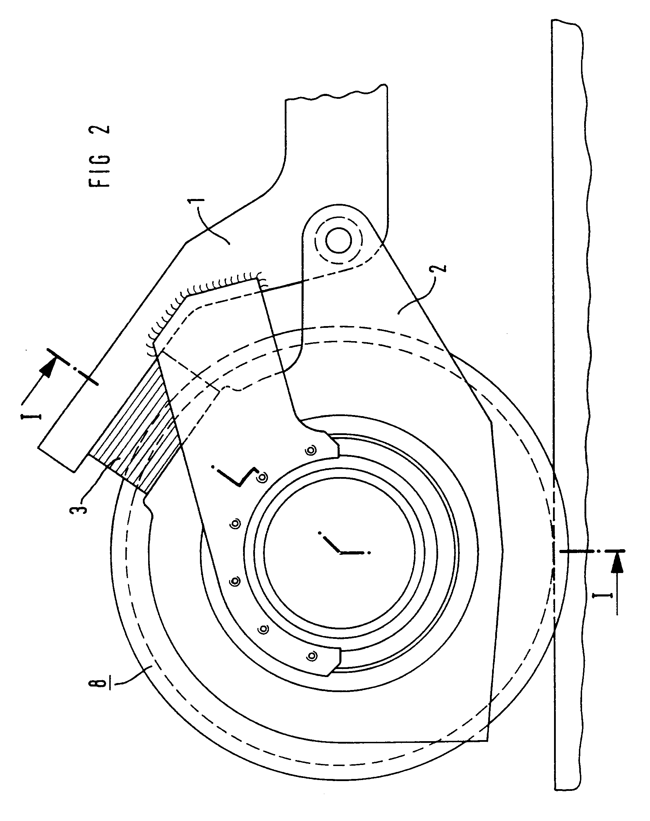

In den FIG 1 bis 3 ist mit 1 ein erstes Fahrwerksteil und mit 2 ein zweites Fahrwerksteil bezeichnet. Das erste Fahrwerksteil ist üblicherweise das Drehgestell, wohingegen das zweite Fahrwerksteil 2 von einer Radträgerschwinge gebildet wird oder Teil einer Achse ist. Das erste Fahrwerksteil 1 stützt sich über eine Primärfeder 3 an dem zum größten Teil ungefederten zweiten Fahrwerksteil 2 ab.

In dem in FIG 1 gezeigten Ausführungsbeispiel ist im ersten Fahrwerksteil 1 ein Innenläufer-Motor 4 über sein Gehäuse 5, in dem ein Stator 6 angeordnet ist, befestigt. Im Gehäuse 5 des Motors 4 ist ein Rotor 7 drehbar gelagert.

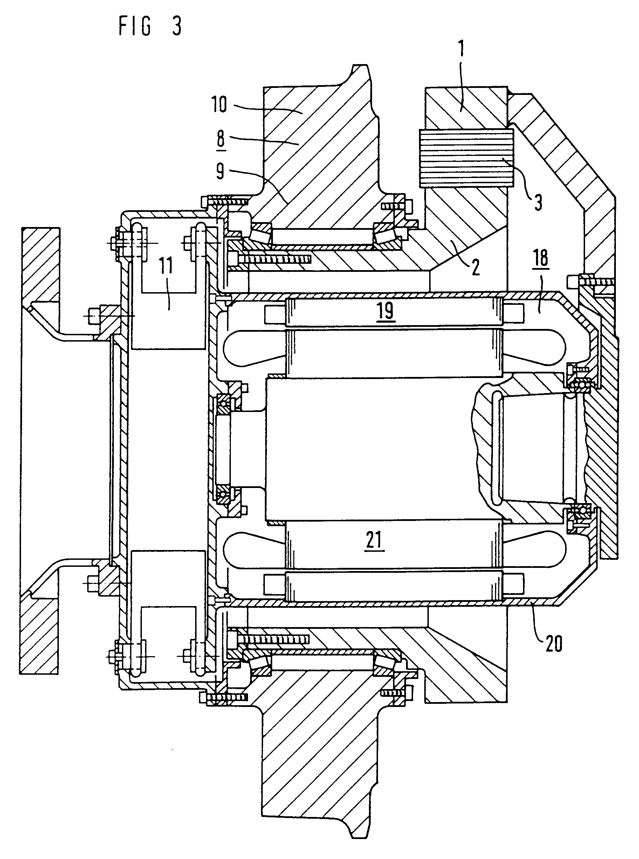

Das Ausführungsbeispiel gemäß FIG 3 unterscheidet sich dadurch, daß als Antrieb ein Außenläufer-Motor 18 vorgesehen ist, dessen Rotor 19 über ein Gehäuse 20 auf einem Stator 21 drehbar gelagert ist. Der Stator 21 ist am ersten Fahrwerksteil 1 befestigt.

Auf dem zweiten Fahrwerksteil 2 ist in beiden Fällen ein Einzelrad 8 bestehend aus Radnabe 9 und Radreifen 10, drehbar gelagert.

Bei dem Ausführungsbeispiel gemäß FIG 1 überträgt der Rotor 7 des Innenläufer-Motors 4 sein Drehmoment über eine Kopplungseinrichtung 11 auf das Einzelrad 8, wobei zwischen der Kopplungseinrichtung 11 und dem Einzelrad 8 ein Planetengetriebe 12 (Stand- oder Umlaufgetriebe) angeordnet ist. Bei der Ausgestaltung nach FIG 3 wirkt der Rotor 19 (Außenläufer) über die Kopplungseinrichtung 11 auf das Einzelrad 8. In beiden Fällen ist die Kopplungseinrichtung 11 jedoch erfindungsgemäß derart ausgeführt, daß die radiale Beweglichkeit der Kopplungseinrichtung 11 größer ist als die der Primärfeder 3.

Bei dem Ausführungsbeispiel gemäß FIG 1 ist das Planetengetriebe 12 in einem Getriebegehäuse 13 gelagert, das mit der Radnabe 9 des Einzelrades 8 verschraubt ist. Das mit der Raddrehzahl rotierende Getriebegehäuse 13 gehört damit zu den ungefederten Massen.
Die Kopplungseinrichtung 11 umfaßt in dem in FIG 1 dargestellten Ausführungsbeispiel eine Kupplungswelle 14, die zwischen dem Rotor 7 des Innenläufer-Motors 4 und einer Getriebewelle 15 angeordnet ist. An beiden Enden der Kupplungswelle 14 ist jeweils eine winkel- und axial nachgiebige Kupplung 16 bzw.17 angeordnet. Als winkel- und axial nachgiebige Kupplungen kommen hierbei z.B. Laschen-, Bogenzahn- und Gummibalgkupplungen in Frage. Anstelle von winkel- und axial nachgiebigen Kupplungen können auch radial und axial nachgiebige Kupplungen, z.B. Parallelkurbel- und Drei-Ring-Lenkerkupplungen, eingesetzt werden.

Bei dem in FIG 1 bis 3 dargestellten Ausgestaltungen des erfindungsgemäßen Einzelradantriebs sind die Motoren 4 und 18 als Radnabenmotoren ausgebildet. Um ohne Beschädigung der Motoren 4 und 18 sowohl eine Einfederung als auch eine Ausfederung des ersten Fahrwerksteils 1 gegenüber dem zweiten Fahrwerksteil 2 zu ermöglichen, ist der für die Einfederung bzw. Ausfederung erforderliche radiale Abstand zwischen dem jeweils größten Außendurchmesser des Motors 4 bzw.18 und dem jeweils kleinsten Innendurchmesser des zweiten Fahrwerksteils 2 größer als der Federweg der Primärfeder 3.

## Patentansprüche

1. Einzelradantrieb für ein elektrisch angetriebenes Fahrzeug, bei dem sich ein erstes Fahrwerksteil (1) über eine Primärfederung (3) an einem ungefederten oder zum Teil ungefederten zweiten Fahrwerksteil (2) abstützt, **gekennzeichnet durch** folgende Merkmale:
- ein Motor (4,18) ist mit seinem Stator (6,21) am ersten Fahrwerksteil (1) befestigt,
- das Einzelrad (8) ist unmittelbar auf dem zweiten Fahrwerksteil (2) drehbar gelagert,
- der Rotor (7,19) des Motors (4,18) überträgt sein Drehmoment zum Einzelrad über eine Kopplungseinrichtung (11), deren radiale Beweglichkeit größer ist als der Federweg der Primärfederung (3).

2. Einzelradantrieb nach Anspruch 1,
**dadurch gekennzeichnet,**
daß die Kopplungseinrichtung (11) direkt mit dem Einzelrad (8) verbunden ist.

3. Einzelradantrieb nach Anspruch 1,
**dadurch gekennzeichnet,**
daß zwischen der Kopplungseinrichtung (11) und dem Einzelrad (8) ein Getriebe (12) angeordnet ist.

4. Einzelradantrieb nach Anspruch 1,
**dadurch gekennzeichnet,**
daß der Motor (4,18) als Radnabenmotor ausgebildet ist, wobei der für die Einfederung bzw. für die Ausfederung des ersten Fahrwerksteils (1) gegenüber dem zweiten Fahrwerksteil (2) erforderliche radiale Abstand zwischen dem jeweils größten Außendurchmesser des Motors (4) und dem jeweils kleinsten Innendurchmesser des zweiten Fahrwerksteils (2) größer ist als der entsprechende Federweg der Primärfederung (3).

5. Einzelradantrieb nach Anspruch 1,
**dadurch gekennzeichnet,**
daß der Motor als Innenläufer-Motor (4) ausgebildet ist.

6. Einzelradantrieb nach Anspruch 1,
**dadurch gekennzeichnet**,
daß der Motor als Außenläufer-Motor (18) ausgebildet ist.

7. Einzelradantrieb nach Anspruch 1,
**dadurch gekennzeichnet**,
daß der größte Außendurchmesser des Motors (4,18) kleiner ist als der kleinste Innendurchmesser des zweiten Fahrwerksteils (2).

8. Einzelradantrieb nach Anspruch 2 oder 3,
**dadurch gekennzeichnet,**
daß die Kopplungseinrichtung (11) eine Kupplungswelle (14) umfaßt, die zwischen dem Rotor (7,19) des Motors (4,18) und einer Getriebewelle (15) bzw. zwischen dem Rotor (7,19) des Motors (4,18) und dem Einzelrad (8) angeordnet ist und an deren beiden Enden jeweils wenigstens eine winkel- und axial nachgiebige Kupplung (16,17) oder eine radial und axial nachgiebige Kupplung angeordnet ist.

9. Einzelradantrieb nach Anspruch 2 oder 3,
**dadurch gekennzeichnet,**
daß die Kopplungseinrichtung (11) eine radial und axial nachgiebige Kupplung umfaßt, die zwischen dem Rotor (7,19) des Motors (4,18) und einer Getriebewelle (15) bzw. zwischen dem Rotor (7,19) des Motors (4,18) und dem Einzelrad (8) angeordnet ist.

10. Einzelradantrieb nach Anspruch 5,
**dadurch gekennzeichnet,**
daß der Stator (6) über das Gehäuse (5) des Innenläufer-Motors (4) am ersten Fahrwerksteil (1) befestigt ist.
